# EUROPÄISCHE PATENTSCHRIFT

(11) **EP 3 585 599 B1**
(45) Veröffentlichungstag und Bekanntmachung des Hinweises auf die Patenterteilung: **04.08.2021**
(21) Anmeldenummer: 18709957.7
(22) Anmeldetag: 26.02.2018
(51) Int. Cl.: B29D 11/00, G02B 3/00

(54) **VERFAHREN ZUM HERSTELLEN EINES OPTISCHEN MIKROLINSENARRAYS UND OPTISCHE MIKROLINSENARRAY**
METHOD FOR PRODUCING AN OPTICAL MICROLENS ARRAY AND OPTICAL MICROLENS ARRAY
PROCÉDÉ DE PRODUCTION D'UNE MATRICE DE MICRO-LENTILLES OPTIQUES ET MATRICE DE MICRO-LENTILLES OPTIQUES

(30) Priorität: 27.02.2017 DE 102017203180
(43) Veröffentlichungstag der Anmeldung: 01.01.2020
(73) Patentinhaber: Fraunhofer-Gesellschaft zur Förderung der angewandten Forschung e.V., 80686 München (DE)
(72) Erfinder: PABST, Oliver, 07745 Jena (DE); BECKERT, Erik, 99310 Arnstadt (DE); DANNBERG, Peter, 07743 Jena (DE)
(74) Vertreter: Zimmermann, Tankred Klaus
(86) Internationale Anmeldenummer: PCT/EP2018/054609
(87) Internationale Veröffentlichungsnummer: WO 2018/154090

(56) Entgegenhaltungen:
- DE-A1-102014 012 375
- DE-A1-102014 112 725
- US-A- 5 435 887
- US-A1- 2005 052 751
- US-A1- 2005 175 846
- US-A1- 2007 217 019
- US-A1- 2012 320 466
- US-A1- 2016 299 263

## Beschreibung

Die Erfindung betrifft ein Verfahren zur Herstellung eines optischen Mikrolinsenarrays, wobei das Verfahren alle Merkmale von Anspruch 1 aufweist. Ferner betrifft die Erfindung ein optisches Mikrolinsenarray, das mittels des vorgenannten Verfahrens herstellbar ist, wobei das Mikrolinsenarray alle Merkmale von Anspruch 10 aufweist.

Mikrolinsenarrays weisen eine Vielzahl einzelner Mikrolinsen auf. Derartige Mikrolinsenarrays weisen gegenüber herkömmlichen Makrolinsen deutliche Vorteile auf. So kann beispielsweise ein für die Mikrolinsen beziehungsweise das Mikrolinsenarray benötigte Bauraum in einem Gerät deutlich eingeschränkt werden gegenüber herkömmlichen Makrolinsen.

So werden derartige Mikrolinsenarrays beispielsweise in Projektoren eingesetzt, wobei die gesamte Baugröße dieser Projektoren hierbei deutlich kleiner ausfallen kann als bei konventionellen Projektoren. Ein weiterer Vorteil besteht darin, dass durch die Vielzahl einzelner Mikrolinsen eine deutlich höhere Tiefenschärfe bei der Abbildung beziehungsweise Projektion erreicht werden kann im Vergleich zu konventionellen Projektoren mit einer einzigen Makrolinse.

Allerdings sind die Herstellungsverfahren für derartige Mikrolinsenarrays sehr aufwändig. Beispielsweise beschreibt die US 5,498,444 A1 ein Verfahren zum Ink-Jet Drucken von Mikrolinsen. Hierbei wird ein Substrat mit einer nicht benetzenden Beschichtung bereitgestellt. Die Ink-Jet Druckköpfe müssen präzise auf nicht beschichtete Stellen ausgerichtet werden. Hierfür schlägt die Druckschrift die Verwendung eines präzisen visuellen Systems vor. Dies macht die Herstellung der Mikrolinsen jedoch aufwändig und teuer.

Ein weiteres Verfahren ist in der US 2005 / 052 751 A1 beschrieben. Hier wird ein Array von Mikrolinsen mit einer Optik kombiniert, wobei die Optik ein nicht-planares Fokusfeld aufweist. Die Mikrolinsen werden hier verwendet, um dieses nicht-planare Fokusfeld zu kompensieren.

Die US 2012 / 320 466 A1 beschreibt ein Substrat mit einer Elektrodenschicht und einem auf der Elektrodenschicht angeordneten hydrophoben Material. Sowohl die Elektrodenschicht als auch das hydrophobe Material weisen eine strukturierte Öffnung auf, in die Linsenmaterial eingebracht werden kann. Die Linse ist dabei direkt auf dem Substrat angeordnet.

Es ist daher eine Aufgabe der vorliegenden Erfindung, bestehende Verfahren zur Herstellung von Mikrolinsen und Mikrolinsenarrays, sowie die Mikrolinsenarrays selbst, zu verbessern.

Diese Aufgabe wird erfindungsgemäß durch ein Verfahren mit den Merkmalen von Anspruch 1, sowie durch ein Mikrolinsenarray mit den Merkmalen von Anspruch 10 gelöst.

Bei dem erfindungsgemäßen Verfahren wird ein Substrat mit einer ersten Seite und einer gegenüberliegenden zweiten Seite bereitgestellt. Auf zumindest der ersten Seite des Substrats sollen Mikrolinsen angeordnet werden, die zusammen das spätere Mikrolinsenarray bilden. Um innerhalb des Arrays eine gewünschte Anordnung der einzelnen Mikrolinsen zueinander zu gewährleisten, sollten die einzelnen Linsen an vordefinierten Orten auf der ersten Seite des Substrats angeordnet werden. Hierbei handelt es sich also um vordefinierte Orte auf der ersten Seite des Substrats, an denen später jeweils eine optische Mikrolinse angeordnet werden soll. Selbiges gilt im Übrigen auch für die zweite Seite des Substrats. Nach dem erfindungsgemäßen Verfahren wird auf die erste Seite des Substrats zumindest abschnittsweise ein Fotolack aufgebracht, wobei dieser Fotolack derart strukturiert wird, dass der strukturierte Fotolack an Orten auf der ersten Seite des Substrats verbleibt, an denen später jeweils eine optische Mikrolinse angeordnet werden soll. Vor dem Aufbringen des Fotolacks auf der ersten Seite des Substrats werden dreidimensionale Erhebungen bereitgestellt, die eine Höhe zwischen 50 nm bis 5 µm aufweisen und über die jeweilige Substratoberfläche der ersten Seite des Substrats hervorstehen. Diese hervorstehenden dreidimensionalen Erhebungen werden an vorbestimmten Orten bereitgestellt, an denen später die jeweils eine optische Mikrolinse angeordnet werden soll. Der Schritt des Aufbringens des Fotolacks beinhaltet, dass der Fotolack auf die hervorstehenden dreidimensionalen Erhebungen aufgebracht wird. Auf die erste Seite des Substrats wird dann eine hydrophobe Beschichtung aufgebracht. Die hydrophobe Beschichtung bedeckt somit die erste Seite des Substrats zumindest abschnittsweise, vorzugsweise aber vollständig. Das heißt, der auf der ersten Seite des Substrats befindliche strukturierte Fotolack sowie die restliche Oberfläche des Substrats sind dann mit der hydrophoben Schicht bedeckt. Der Schritt des Aufbringens der hydrophoben Beschichtung beinhaltet, dass die hydrophobe Beschichtung auf die hervorstehenden dreidimensionalen Erhebungen aufgebracht wird. Anschließend wird der strukturierte Fotolack einschließlich der darauf befindlichen hydrophoben Beschichtung von den hervorstehenden dreidimensionalen Erhebungen entfernt. Anschließend wird der strukturierte Fotolack einschließlich der darauf befindlichen hydrophoben Beschichtung wieder von der ersten Seite des Substrats entfernt. Anschließend wird auf die von dem strukturierten Fotolack befreiten Stellen der ersten Seite des Substrats je eine Mikrolinse angeordnet. Ein Vorteil des erfindungsgemäßen Verfahrens liegt unter anderem darin, dass die hydrophobe Beschichtung die erste Seite des Substrats hydrophobisiert, mit Ausnahme der Stellen, an denen sich der Fotolack befand. Beim Entfernen des strukturierten Fotolacks wird nämlich mit dem Fotolack zusammen auch die sich darauf befindliche hydrophobe Beschichtung mit entfernt. Hierdurch wird das unter dem strukturierten Fotolack befindliche Substrat wieder freigelegt. Wenn das Substrat vorzugsweise hydrophile Eigenschaften aufweist, ergeben sich durch das Entfernen des Fotolacks hydrophile Spots auf dem Substrat, die von der hydrophoben Schicht umgeben sind. Auf diesen hydrophilen Spots kann dann jeweils eine Mikrolinse angeordnet werden.

Mit diesem erfindungsgemäßen Verfahren ist ein erfindungsgemäßes Mikrolinsenarray herstellbar. Ein solches erfindungsgemäßes Mikrolinsenarray weist unter anderem ein zumindest abschnittsweise lichtdurchlässiges Substrat mit einer ersten Seite und einer gegenüberliegenden zweiten Seite auf. Auf der ersten und/oder auf der zweiten Seite des Substrats weist dieses jeweils eine Vielzahl von dreidimensionalen Erhebungen auf, die über die jeweilige Substratoberfläche der ersten oder zweiten Seite des Substrats hervorstehen. Diese dreidimensionalen Erhebungen können beispielsweise eine Form aufweisen, die an Podeste oder flache Säulen erinnert. Die dreidimensionalen Erhebungen erstrecken sich auf der ersten und/oder zweiten Seite des Substrats von der jeweiligen Substratoberfläche weg. Die am weitesten von der Substratoberfläche entfernte Oberseite der dreidimensionalen Erhebungen weist eine Oberfläche auf, die abgeflacht sein kann und vorzugsweise parallel zu der Substratoberfläche angeordnet ist. Auf jeder dieser vom Substrat beabstandeten Oberflächen der dreidimensionalen Erhebungen ist erfindungsgemäß eine Mikrolinse angeordnet. Wie zuvor mit Bezug auf das Verfahren beschrieben wurde, ist ein erfindungsgemäßes Mikrolinsenarray nach dessen Herstellung daran erkennbar, dass sich jeweils zwischen den dreidimensionalen Erhebungen auf der ersten und/oder der zweiten Seite des Substrats eine hydrophobe Beschichtung befindet.

Ausführungsbeispiele der Erfindung sind in der Zeichnung dargestellt und werden nachstehend erläutert. Es zeigen:
- Fig. 1A: eine Seitenansicht eines beispielhaften Substrats für die Herstellung eines Mikrolinsenarrays,
- Fig. 1B: eine weitere Seitenansicht des Substrats gemäß eines weiteren Prozessschritts des beispielhaft beschriebenen Verfahrens,
- Fig. 1C: eine weitere Seitenansicht des Substrats gemäß eines weiteren Prozessschritts des beispielhaft beschriebenen Verfahrens,
- Fig. 1D: eine weitere Seitenansicht des Substrats gemäß eines weiteren Prozessschritts des beispielhaft beschriebenen Verfahrens,
- Fig. 1E: eine weitere Seitenansicht des Substrats gemäß eines weiteren Prozessschritts des beispielhaft beschriebenen Verfahrens,
- Fig. 1F: eine weitere Seitenansicht des Substrats gemäß eines weiteren Prozessschritts des beispielhaft beschriebenen Verfahrens,
- Fig. 1G: eine weitere Seitenansicht des Substrats gemäß eines weiteren Prozessschritts des beispielhaft beschriebenen Verfahrens,
- Fig. 2: eine Draufsicht auf ein beispielhaft beschriebenes Mikrolinsenarray,
- Fig. 3A: eine Seitenansicht eines Substrats für die Herstellung eines Mikrolinsenarrays unter Anwendung eines weiteren beispielhaft beschriebenen Verfahrens,
- Fig. 3B: eine weitere Seitenansicht des Substrats gemäß eines weiteren Prozessschritts des beispielhaft beschriebenen Verfahrens,
- Fig. 3C: eine weitere Seitenansicht des Substrats gemäß eines weiteren Prozessschritts des beispielhaft beschriebenen Verfahrens,
- Fig. 3D: eine weitere Seitenansicht des Substrats gemäß eines weiteren Prozessschritts des beispielhaft beschriebenen Verfahrens,
- Fig. 3E: eine weitere Seitenansicht des Substrats gemäß eines weiteren Prozessschritts des beispielhaft beschriebenen Verfahrens,
- Fig. 3F: eine weitere Seitenansicht des Substrats gemäß eines weiteren Prozessschritts des beispielhaft beschriebenen Verfahrens,
- Fig. 3G: eine weitere Seitenansicht des Substrats gemäß eines weiteren Prozessschritts des beispielhaft beschriebenen Verfahrens,
- Fig. 4: eine Seitenansicht eines Substrats für die Herstellung eines Mikrolinsenarrays unter Anwendung eines weiteren beispielhaft beschriebenen Verfahrens,
- Fig. 5: eine Draufsicht auf eine strukturierte Metallschicht zur Ausbildung von Dias,
- Fig. 6: eine Draufsicht auf ein beispielhaft beschriebenes Mikrolinsenarray gemäß einer Ausführungsform der Erfindung,
- Fig. 7: eine Perspektivansicht eines Substrats für ein erfindungsgemäßes Mikrolinsenarray gemäß einer Ausführungsform der Erfindung,
- Fig. 8: eine Seitenansicht dieses Substrats,
- Fig. 9: eine weitere Seitenansicht dieses Substrats,
- Fig. 10: eine Seitenansicht eines erfindungsgemäßen Mikrolinsenarrays,
- Fig. 11A: eine Seitenansicht einer weiteren Ausführungsform eines erfindungsgemäßen Mikrolinsenarrays,

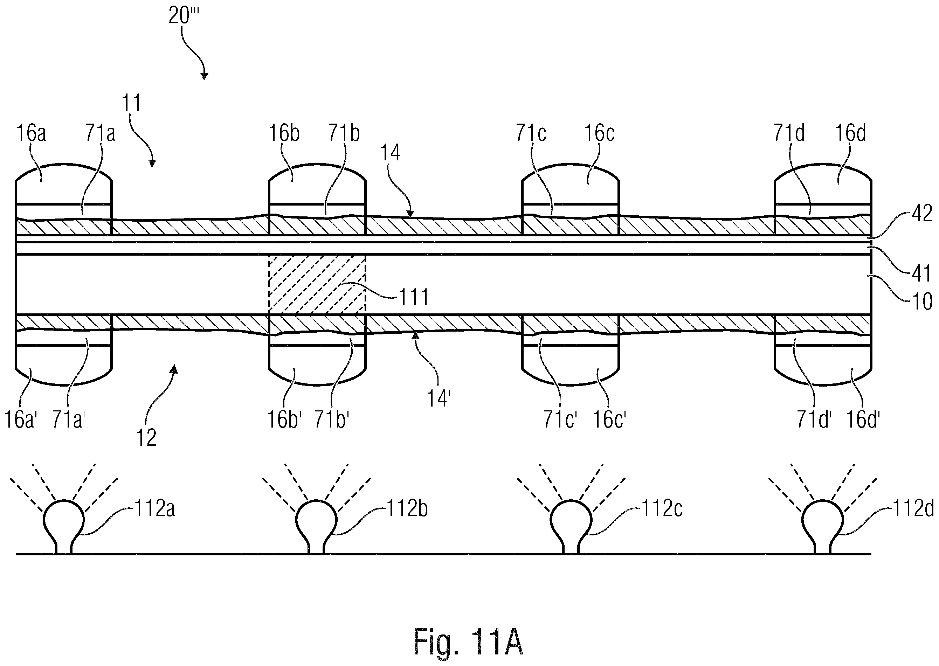

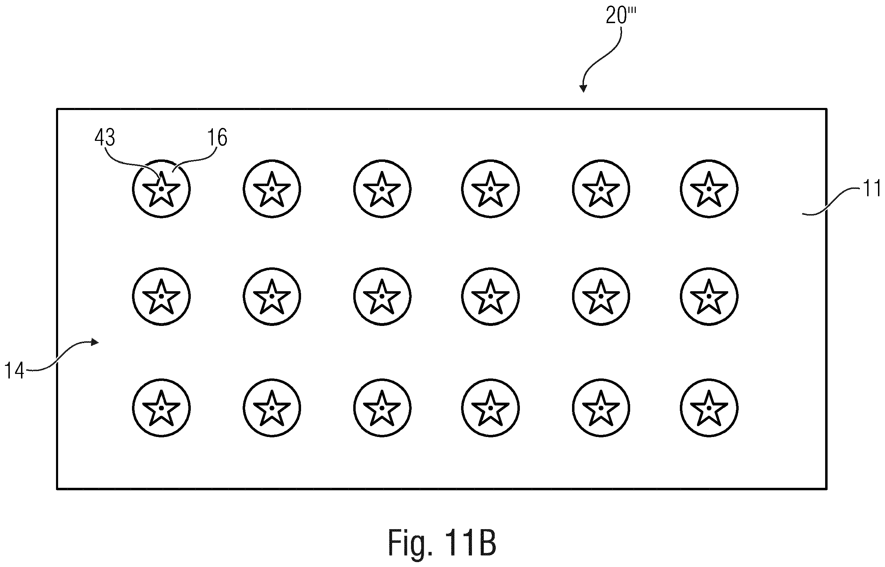

- Fig. 11: B eine Draufsicht auf dieses Mikrolinsenarray,

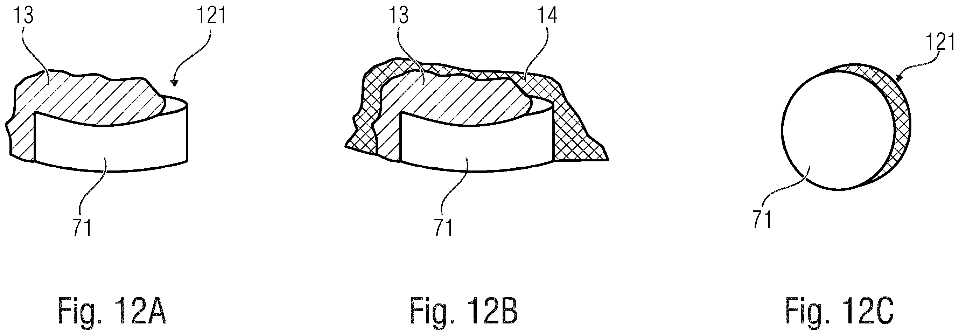

- Fig. 12A: eine Seitenansicht einer dreidimensionalen Erhebung zur Verwendung für ein erfindungsgemäßes Mikrolinsenarray,
- Fig. 12B: eine weitere Seitenansicht dieser dreidimensionalen Erhebung,
- Fig. 12C: eine Draufsicht auf diese dreidimensionale Erhebung,

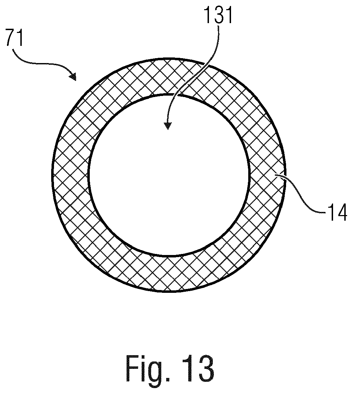

- Fig. 13: eine Draufsicht auf eine dreidimensionale Erhebung zur Verwendung für ein erfindungsgemäßes Mikrolinsenarray, und

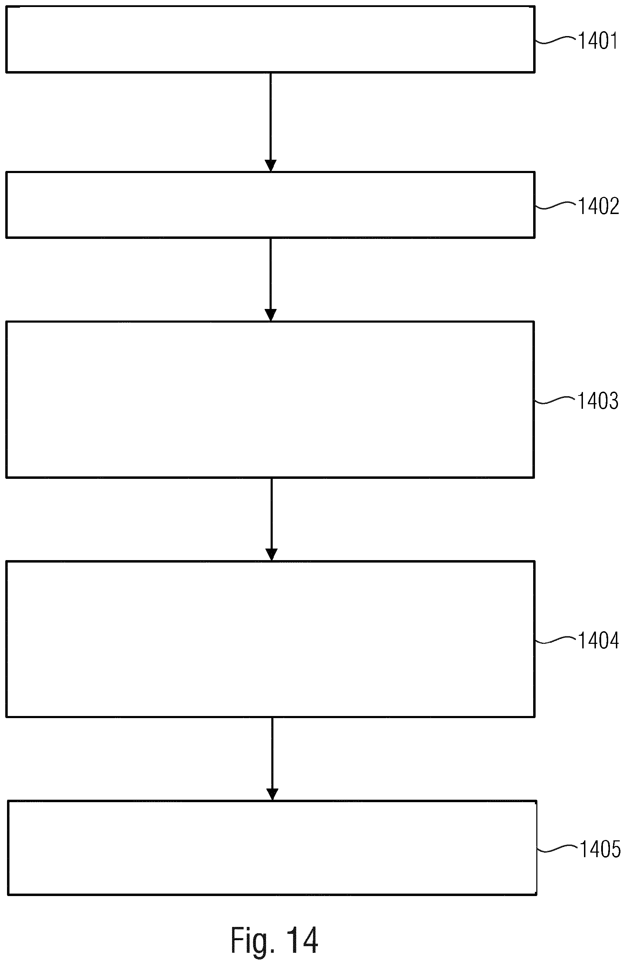

- Fig. 14: ein Blockdiagram eines erfindungsgemäßen Verfahrens.

Im Folgenden werden bevorzugte Ausführungsbeispiele der Erfindung mit Bezug auf die Figuren näher beschrieben, wobei Elemente mit derselben oder ähnlichen Funktion mit denselben Bezugszeichen versehen sind.

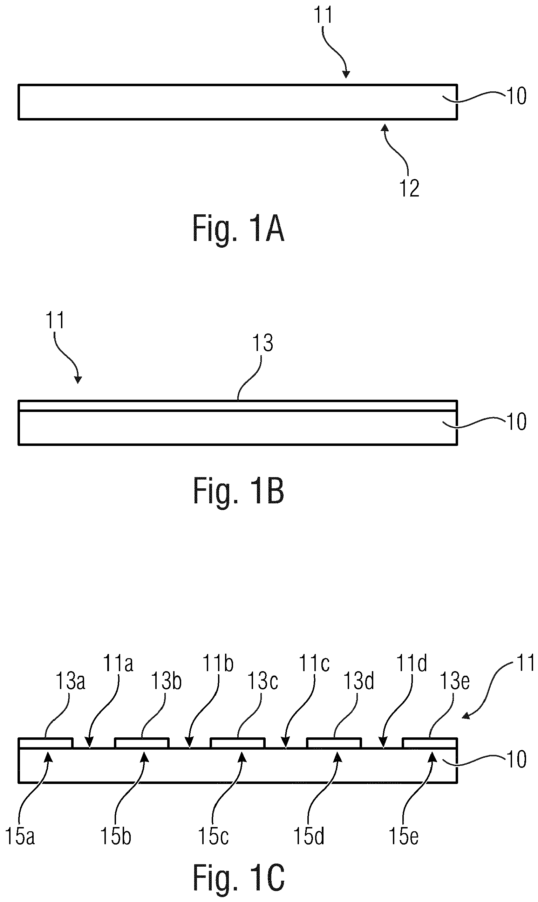

Die Figuren 1A bis 1G zeigen einzelne Schritte des beispielhaften Verfahrens zum Herstellen eines Mikrolinsenarrays.

In Figur 1A wird zunächst ein Substrat 10 bereitgestellt. Das Substrat 10 weist eine erste Seite 11 und eine gegenüberliegende zweite Seite 12 auf. Das Substrat 10 kann beispielsweise zumindest abschnittsweise lichtdurchlässig beziehungsweise transparent sein. Das Substrat 10 kann beispielsweise aus Glas, Silizium, SiO₂, oder transparenten beziehungsweise teiltransparenten Polymeren hergestellt sein.

In Figur 1B wird auf die erste Seite 11 des Substrats 10 zumindest abschnittsweise ein Fotolack 13 aufgebracht.

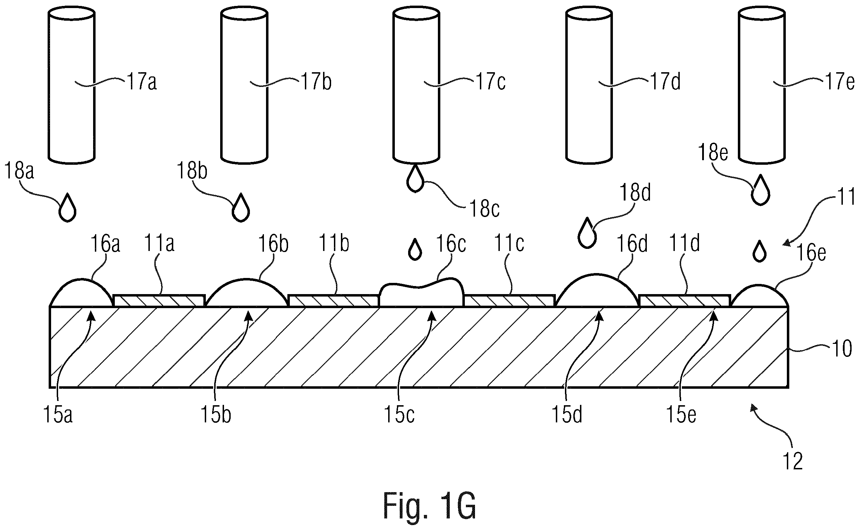

In Figur 1C wird der Fotolack 13 mittels gängiger Verfahren, strukturiert. Hierbei wird der Fotolack 13 derart strukturiert, dass der strukturierte Fotolack 13a - 13e an Orten 15a - 15e (Figur 1G) auf der ersten Seite 11 des Substrats 10 verbleibt, an denen später jeweils eine optische Mikrolinse 16a - 16e (Figur 1G) angeordnet werden soll. Anders ausgedrückt wird der Fotolack 13 beim Schritt des Strukturierens an Orten 11a - 11d, an denen später keine optischen Mikrolinsen 16a - 16e angeordnet werden sollen, entfernt. Es werden also die in Figur 1C mit den Bezugszeichen 11a - 11d gekennzeichneten Stellen der ersten Seite 11 des Substrats 10 freigelegt.

Wie bereits eingangs erwähnt wurde, sind die Positionen der einzelnen Mikrolinsen eines Mikrolinsenarrays im Vorhinein bekannt. Um innerhalb des Arrays die gewünschte Anordnung bzw. Positionierung der einzelnen Mikrolinsen zueinander zu gewährleisten, sollten die einzelnen Mikrolinsen also an diesen bekannten bzw. vordefinierten Orten 15a - 15e auf der ersten Seite 11 des Substrats 10 angeordnet werden. Hierbei handelt es sich also um vordefinierte Orte 15a - 15e auf der ersten Seite 11 des Substrats 10, an denen später jeweils eine optische Mikrolinse 16a - 16e angeordnet werden soll.

Wie in Figur 1C zu sehen ist, werden also später einzelne Mikrolinsen an denjenigen Orten 15a - 15e auf der ersten Seite 11 des Substrats 10 angeordnet werden, an denen sich in diesem Verfahrensschritt der strukturierte Fotolack 13a - 13e befindet.

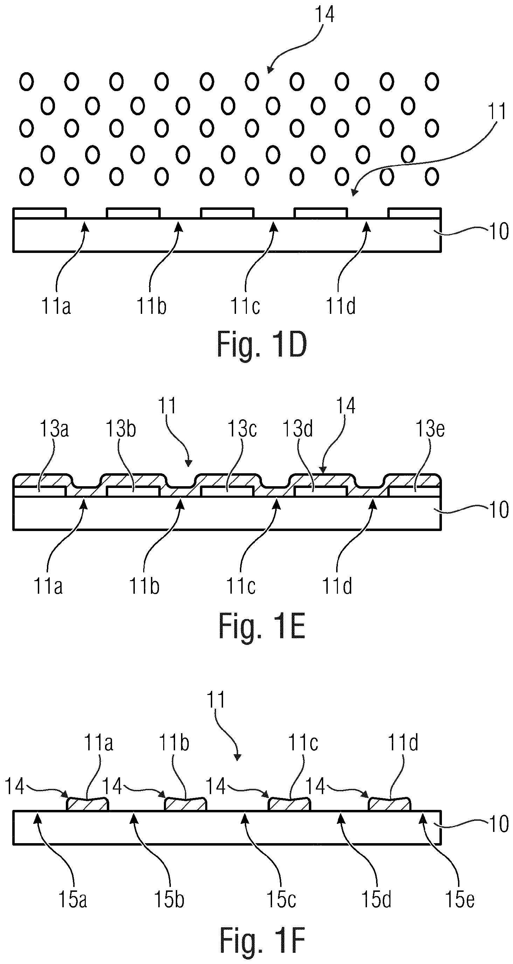

Figur 1D zeigt einen weiteren Verfahrensschritt. Hierbei wird eine hydrophobe Beschichtung 14 auf die erste Seite 11 des Substrats 10 aufgebracht. Die hydrophobe Beschichtung 14 kann beispielsweise in der Gasphase oder in der Flüssigphase auf die erste Seite 11 des Substrats 10 aufgebracht werden. In Figur 1D ist das Beschichten daher nur beispielhaft anhand der abgebildeten Tröpfchen dargestellt. Als geeignetes Mittel zur Hydrophobisierung kann beispielsweise Silan verwendet werden.

Das Substrat 10, beziehungsweise die erste Seite 11 des Substrats 10, kann vorzugsweise global beschichtet werden, das heißt die gesamte Oberfläche der ersten Seite 11 des Substrats 10 wird beschichtet. Es ist aber ebenso vorstellbar, dass die erste Seite 11 des Substrats 10 nur lokal beschichtet wird. In diesem Fall könnten beispielsweise nur die vom Fotolack 13 befreiten Stellen 11a - 11d beschichtet werden.

Figur 1E zeigt das Ergebnis des Beschichtens mit der hydrophoben Beschichtung 14. Es ist zu erkennen, dass sich die hydrophobe Beschichtung 14 in Form eines dünnen Films auf der ersten Seite 11 des Substrats 10, das heißt auf dem verbleibenden Fotolack 13a - 13e sowie in den Zwischenräumen 11a - 11d, abgesetzt hat. Zur Verdeutlichung der hydrophoben Schicht 14 gegenüber den übrigen Strukturen ist die hydrophobe Schicht 14 mit Strichlinien gekennzeichnet.

Nach dem Aufbringen der hydrophoben Beschichtung 14 wird die hydrophobe Beschichtung 14 zumindest teilweise wieder von der ersten Seite 11 des Substrats 10 entfernt. Und zwar wird, wie in Figur 1F zu sehen ist, der strukturierte Fotolack 13a - 13e einschließlich der darauf befindlichen hydrophoben Beschichtung 14 von der ersten Seite 11 des Substrats 10 entfernt.

Somit bleiben auf der ersten Seite 11 des Substrats 10 diejenigen Stellen 11a - 11d mit der hydrophoben Beschichtung 14 bedeckt, die zuvor nicht mit dem Fotolack 13 bedeckt waren. Die hydrophobe Beschichtung 14 bildet also sozusagen ein Negativ gegenüber dem strukturierten Fotolack 13a - 13e aus den Figuren 1C - 1E.

Diejenigen Stellen 15a - 15e, die hingegen mit dem Fotolack 13a - 13e bedeckt waren, sind also nun freigelegt. In dem hier gezeigten Ausführungsbeispiel handelt es sich hierbei um freigelegte Stellen 15a - 15e der Substratoberfläche. Sofern die Substratoberfläche hydrophile Eigenschaften aufweist, so sind auch die freigelegten Stellen 15a - 15e hydrophil.

Das heißt, obwohl die erste Seite 11 des Substrats 10 zuvor großflächig mit der hydrophoben Schicht 14 beschichtet wurde, erhält man durch das Entfernen des Fotolacks 13a - 13e hydrophile Stellen 15a - 15e auf der ersten Seite 11 des Substrats 10.

Figur 1F zeigt einen weiteren Schritt des beispielhaft beschriebenen Verfahrens. Hier wird je eine Mikrolinse 16a - 16e auf die von dem strukturierten Fotolack 13a - 13e befreiten Stellen 15a - 15e der ersten Seite 11 des Substrats 10 angeordnet. Wie zuvor erwähnt, können diese vom Fotolack 13a - 13e befreiten Stellen 15a - 15e hydrophile Eigenschaften aufweisen.

Dies kann zum Beispiel dann vorteilhaft sein, wenn die Mikrolinsen 16a - 16e gedruckt werden. Hierfür kann beispielsweise ein optisches Ink-Jet Druckverfahren eingesetzt werden, wie es beispielhaft in Figur 1G abgebildet ist. Mehrere Düsen 17a - 17e eines Ink-Jet Drucksystems stoßen einzelne Tropfen 18a - 18e eines optischen Materials, z.B. lichtdurchlässige Polymere, aus. Die sich auf der ersten Seite 11 des Substrats 10 ansammelnden Tropfen bilden dann jeweils eine Mikrolinse 16a - 16e aus.

Die einzelnen Düsen 17a - 17e müssen hierbei nicht exakt ausgerichtet werden. Die Ausrichtung der Düsen 17a - 17e gegenüber den vom Fotolack 13a - 13e befreiten Stellen 15a - 15e kann mit relativ großen Toleranzen erfolgen. Denn falls die ausgestoßenen Tropfen 18a - 18e auf Randbereiche der hydrophoben Beschichtung 11a - 11d fallen sollten, so perlen sie dort ab und landen in den vom Fotolack 13a - 13e befreiten Stellen 15a - 15e.

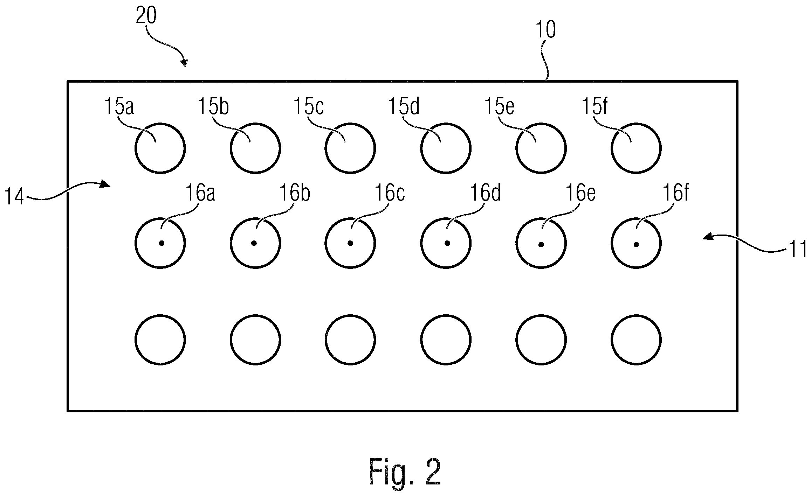

Zur Verdeutlichung der hydrophoben Beschichtung 14 und der vom Fotolack 13a - 13e befreiten Stellen 15a - 15e zeigt Figur 2 eine Draufsicht auf ein beispielhaftes Mikrolinsenarray 20, das mit einen hierin beschriebenen Verfahren hergestellt wurde.

Es ist die erste Seite 11 des Substrats 10 zu erkennen, wobei diese erste Seite 11 des Substrats 10 nahezu vollständig mit der hydrophoben Schicht 14 beschichtet ist. Die vom Fotolack 13a - 13f befreiten Stellen 15a - 15f markieren die Orte, an denen die Mikrolinsen 16a - 16f angeordnet werden sollen. Wie eingangs erwähnt wurde, wird der strukturierte Fotolack 13a - 13f ja mitsamt der darauf befindlichen hydrophoben Beschichtung 14 entfernt. Somit weisen auch die vom Fotolack 13a - 13f befreiten Stellen 15a - 15f auch keine hydrophobe Beschichtung 14 mehr auf.

Die erste Seite 11 des Substrats 10 ist somit mit Ausnahme der vom Fotolack 13a - 13f befreiten Stellen 15a - 15f mit der hydrophoben Beschichtung 14 beschichtet. In der in Figur 2 abgebildeten mittleren Reihe sind bereits Mikrolinsen 16a - 16f angeordnet worden. Diese können beispielsweise mittels des zuvor beschriebenen Ink-Jet Druckverfahrens auf der ersten Seite 11 des Substrats 10 aufgedruckt worden sein.

Das mit Bezug auf die Figuren 1A bis 1G erwähnte Verfahren kann auch so ausgeführt werden, dass die zweite Seite 12 des Substrats 10 anstatt der beschriebenen ersten Seite 11 entsprechend prozessiert wird.

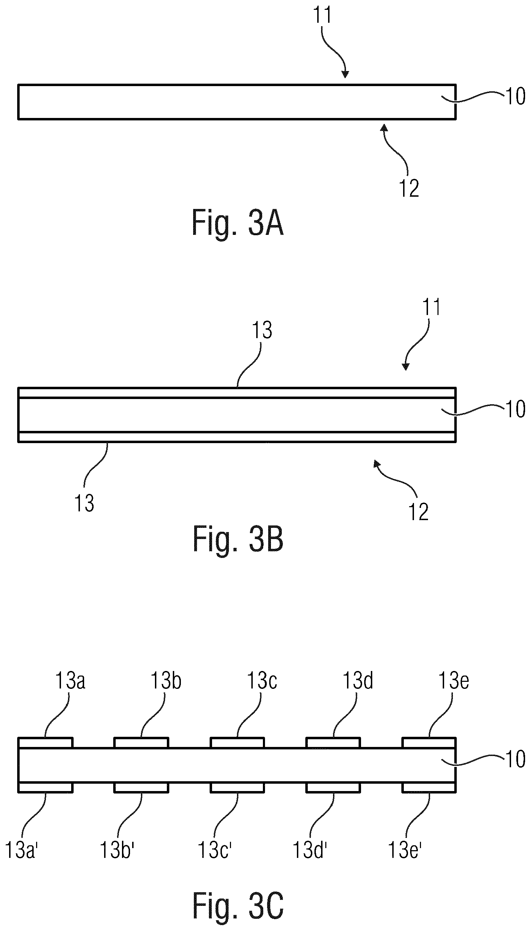

Gemäß einer weiteren denkbaren Ausführungsform können auch sowohl die erste Seite 11 als auch die zweite Seite 12 des Substrats 10 prozessiert werden. Dies wird nachfolgend mit Bezug auf die Figuren 3A bis 3G beschrieben.

Wie in Figur 3A zu sehen ist wird also zunächst wieder ein Substrat 10 mit einer ersten Seite 11 und einer gegenüberliegenden zweiten Seite 12 bereitgestellt.

In Figur 3B wird dann der Fotolack 13 zumindest abschnittsweise sowohl auf die erste Seite 11 als auch auf die zweite Seite 12 des Substrats 10 aufgebracht.

In Figur 3C wird der Fotolack 13 strukturiert, und zwar wiederum derart, dass der strukturierte Fotolack 13a' - 13e' an Orten auf der zweiten Seite 12 des Substrats 10 verbleibt, an denen später jeweils eine optische Mikrolinse angeordnet werden soll.

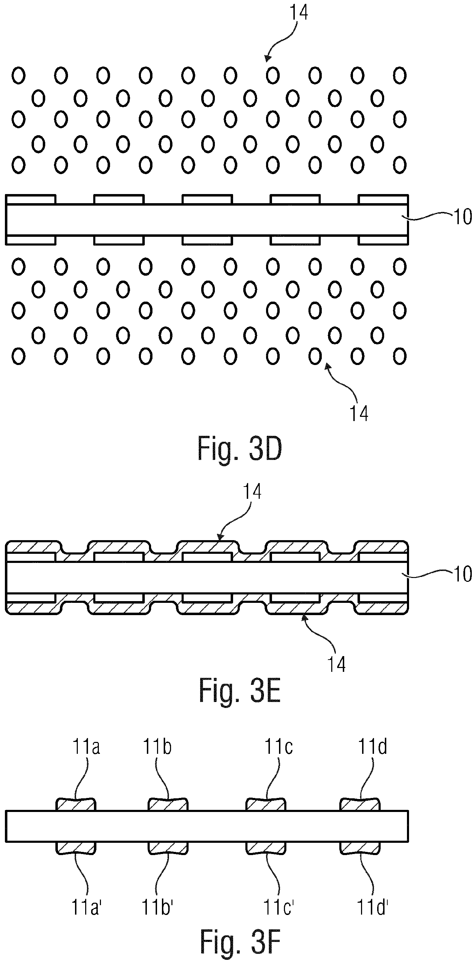

In Figur 3D wird die hydrophobe Beschichtung 14 sowohl auf die erste Seite 11 als auch auf die zweite Seite 12 des Substrats 10 aufgebracht. Das Ergebnis des Beschichtungsprozesses ist dann wiederum in Figur 3E zu erkennen. Hier befindet sich die hydrophobe Beschichtung 14 in Form einer dünnen Schicht sowohl auf der ersten Seite 11 als auch auf der zweiten Seite 12 des Substrats 10.

Wie in Figur 3F zu sehen ist, wird anschließend der strukturierte Fotolack 13a - 13e auf der ersten Seite 11 des Substrats 10 sowie der strukturierte Fotolack 13a' - 13e' auf der zweiten Seite 12 des Substrats 10 einschließlich der jeweils darauf befindlichen hydrophoben Beschichtung 14 von der ersten bzw. zweiten Seite 11, 12 des Substrats 10 entfernt. Die hydrophobe Beschichtung 14 bleibt somit an denjenigen Orten 11a - 11d, 11a' - 11d' bestehen, an denen auf dem späteren Mikrolinsenarray keine Mikrolinsen vorgesehen sind.

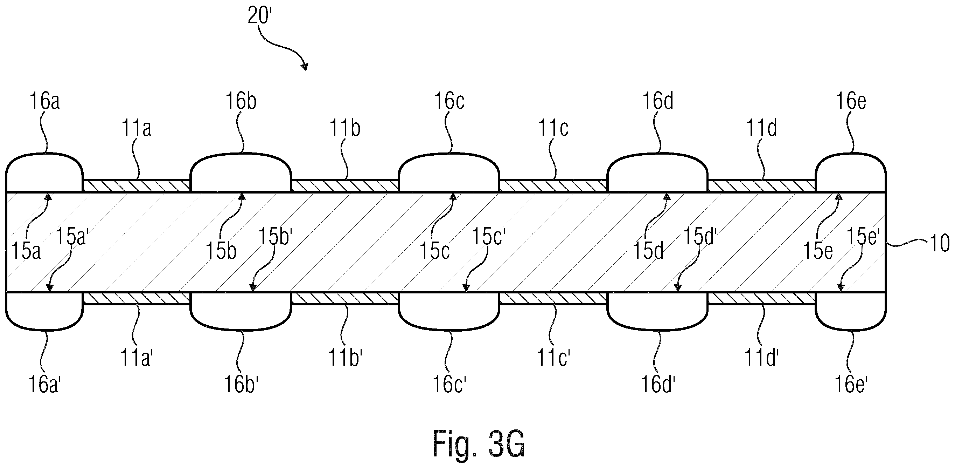

Figur 3G zeigt das fertige Mikrolinsenarray 20' mit auf beiden Seiten 11, 12 des Substrats 10 angeordneten Mikrolinsen 16a - 16e, 16a' - 16e'. Gemäß des erfindungsgemäßen Verfahrens wird hier je eine Mikrolinse auf die von dem strukturierten Fotolack 13a - 13e, 13a' - 13e' befreiten Stellen 15a - 15e, 15a' - 15e' der ersten Seite 11 und der zweiten Seite 12 des Substrats 10 angeordnet.

In den Zwischenräumen 11a - 11d zwischen den einzelnen Mikrolinsen 16a - 16e auf der ersten Seite 11 des Substrats 10 sowie in den Zwischenräumen 11a' - 11d' zwischen den einzelnen Mikrolinsen 16a' - 16e' auf der zweiten Seite 11 des Substrats 10 verbleibt die zuvor aufgebrachte hydrophobe Beschichtung 14.

Eine bevorzugte Ausführungsform sieht vor, ein erfindungsgemäßes Mikrolinsenarray 20, 20' mit Dias, d.h. mit hinterleuchtbaren Schattenmasken, zu kombinieren.

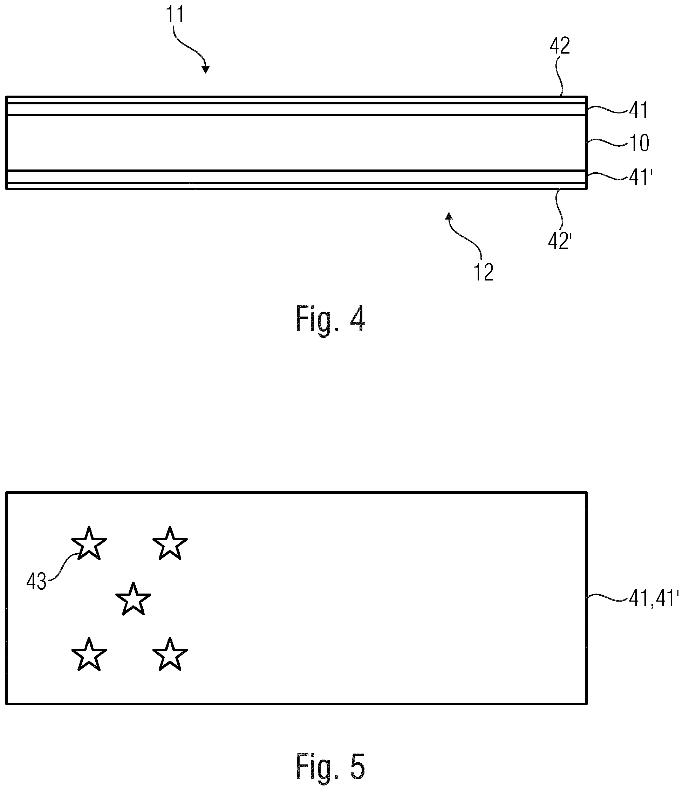

Eine Beispiel hierfür ist in Figur 4 gezeigt. Es wird hier vor dem Aufbringen des Fotolacks eine Metallschicht 41, 41' auf der ersten oder der zweiten Seite 11, 12 des Substrats 10 angeordnet. Auf dieser Metallschicht 41, 41' wird vorzugsweise eine weitere Schicht eines lichtdurchlässigen Materials 42, 42' angeordnet. Hierbei kann es sich beispielsweise um eine SiO₂-Schicht 42, 42' handeln.

Nach dem Anordnen der weiteren lichtdurchlässigen Schicht 42, 42', z.B. SiO₂-Schicht, wird der Fotolack 13, 13' dann auf diese weitere Schicht 42, 42'aufgetragen. Das Verfahren geht dann im Wesentlichen wie mit Bezug auf die Figuren 1B bis 1G beschrieben weiter, nur eben mit dem Unterschied, dass sich zwischen dem Substrat 10 und dem Fotolack 13 die Metallschicht 41, 41' und die weitere lichtdurchlässige Schicht 42, 42'befinden.

Wie in Figur 5 gezeigt ist, kann die Metallschicht 41, 41' optional strukturiert werden. Das Strukturieren der Metallschicht 41, 41' kann vor dem Anbringen auf dem Substrat 10 erfolgen, oder die Metallschicht 41, 41' kann direkt auf dem Substrat 10 strukturiert werden. Alternativ kann die Metallschicht 41, 41' bereits vorab strukturiert sein und als strukturiertes Teil angeliefert und auf dem Substrat 10 angebracht werden. Vorzugsweise geschieht die Strukturierung der Metallschicht 41, 41' jedoch erst nachdem die Metallschicht 41, 41' auf das Substrat 10 aufgebracht wurde.

Im Sinne der vorliegenden Offenbarung wird unter dem Terminus des Strukturierens das Fertigen von eingangs erwähnten Dias verstanden. Diese Dias werden auch als hinterleuchtbare Schattenmasken bezeichnet. In Figur 5 ist beispielhaft in Form von Sternen ein solches Dia 43 gezeigt. Jeder Stern bildet jeweils ein Dia 43. Die vorliegende Offenbarung ist selbstverständlich nicht auf die beispielhaft abgebildeten Sterne begrenzt. Vielmehr kann ein solches Dia 43 in beliebiger Form vorliegen.

Ein Dia 43 kann beispielsweise hergestellt werden, indem eine entsprechend geformte Ausnehmung in der Metallschicht 41, 41' gebildet wird. Das heißt, die Metallschicht 41, 41' weist an dieser Stelle eine materialfreie Zone auf, sodass Licht durch diese Ausnehmung bzw. materialfreie Zone hindurchscheinen kann.

Erfindungsgemäß beinhaltet demnach das Strukturieren der Metallschicht 41, 41' ein teilweises und lokales Entfernen der Metallschicht 41, 41', sodass eine hinterleuchtbare Struktur 43 in der Metallschicht 41, 41' bereitgestellt wird.

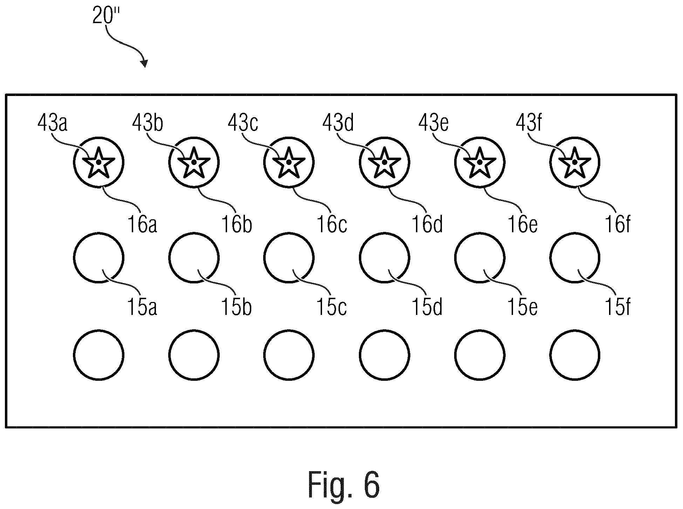

Figur 6 zeigt eine Draufsicht auf ein weiteres Mikrolinsenarray 20". Dieses Mikrolinsenarray 20" ist vergleichbar mit dem in Figur 2 abgebildeten Mikrolinsenarray 20, jedoch mit dem Unterschied, dass hier zusätzlich noch die zuvor beschriebenen Dias 43 vorhanden sind.

Hierbei überlagern sich die Dias 43a - 43f mit den einzelnen optischen Mikrolinsen 16a - 16f entlang der optischen Achse. Das heißt, jedes Dia 43a - 43f ist einer einzelnen Mikrolinse 16a - 16f zugeordnet. Man kann sagen, die Mikrolinsen 16a - 16f und die Dias 43a - 43f sind deckungsgleich oder kongruent entlang eines Lichtpfads übereinander angeordnet.

Hierzu ist es vorteilhaft, wenn die Dias 43a - 43f derart auf der ersten bzw. zweiten Seite 11, 12 des Substrats 10 angeordnet werden, dass sich die Dias 43a - 43f an den vorbestimmten Orten 15a - 15f befinden, an denen später jeweils eine optische Mikrolinse 16a - 16f des Mikrolinsenarrays 20" angeordnet werden soll.

Erfindungsgemäß wird also die Metallschicht 41, 41' derart auf dem Substrat 10 angeordnet, dass sich der strukturierte Teil 43a - 43f der Metallschicht 41, 41' an den vorbestimmten Orten 15a - 15f auf der ersten Seite 11 oder der zweiten Seite 12 des Substrats 10 befindet, an denen später die jeweils eine optische Mikrolinse 16a - 16f angeordnet werden soll.

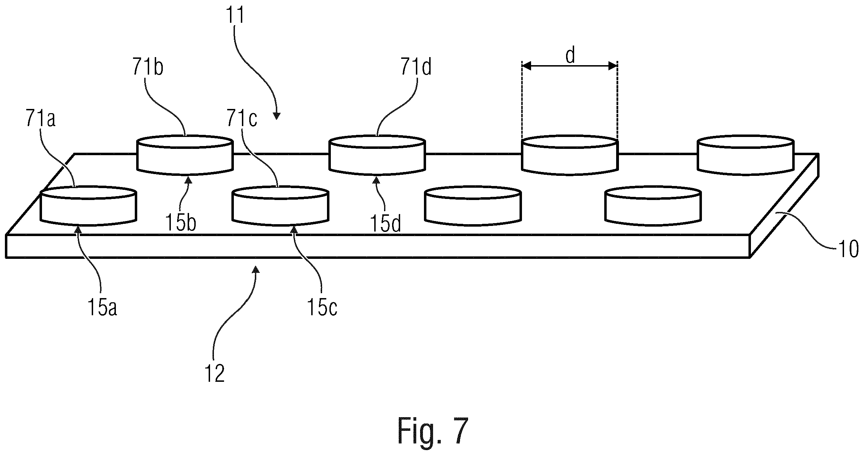

Figur 7 zeigt einen weiteren Verfahrensschritt gemäß einer Ausführungsform des erfindungsgemäßen Verfahrens. In Figur 7 ist eine Perspektivansicht eines Substrats 10 mit einer ersten Seite 11 und einer gegenüberliegenden zweiten Seite 12 abgebildet.

Auf der ersten Seite 11 des Substrats 10 ist hier erfindungsgemäß mindestens eine dreidimensionale Erhebung 71a angeordnet. Diese dreidimensionalen Erhebungen 71a - 71d können auch auf der zweiten Seite 12 des Substrats 10, beziehungsweise auf beiden Seiten 11, 12 des Substrats 10, angeordnet sein.

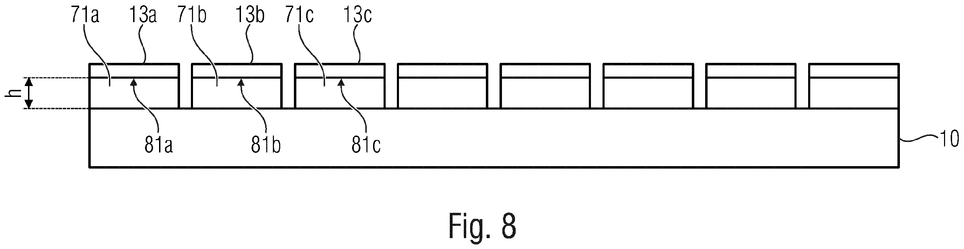

Die dreidimensionalen Erhebungen 71a - 71d erheben sich gegenüber der Oberfläche der ersten Seite 11 des Substrats 10. Gemäß einer Ausführungsform der Erfindung können die dreidimensionalen Erhebungen 71a - 71d eine Höhe h zwischen 50nm bis 5 µm (Figur 8) aufweisen.

Wie in Figur 7 beispielhaft gezeigt ist, können die dreidimensionalen Erhebungen 71a - 71d als zylindrische Podeste ausgeführt sein. Die zylindrischen Podeste 71a - 71d können einen Durchmesser d zwischen 50 µm und 2 mm aufweisen. Alternativ oder zusätzlich können die dreidimensionalen Erhebungen 71a - 71d transparent sein. Transparente dreidimensionale Erhebungen 71a - 71d können beispielsweise aus SiO₂ hergestellt sein.

Auf den dreidimensionalen Erhebungen bzw. Podesten 71a - 71d werden später die einzelnen Mikrolinsen angeordnet. Deshalb ist es vorteilhaft, wenn die dreidimensionalen Erhebungen bzw. Podeste 71a - 71d an den vorbestimmten Orten 15a - 15d bereitgestellt werden, an denen später die einzelnen optischen Mikrolinsen angeordnet werden sollen.

Erfindungsgemäß werden bei dieser Ausführungsform also, vor dem Aufbringen des Fotolacks 13, auf der ersten Seite 11 und/oder auf der zweiten Seite 12 des Substrats 10 dreidimensionale Erhebungen 71a - 71d bereitgestellt, die über die jeweilige Substratoberfläche der ersten oder zweiten Seite 11, 12 des Substrats 10 hervorstehen, wobei diese hervorstehenden dreidimensionalen Erhebungen 71a - 71d an den vorbestimmten Orten 15a - 15d bereitgestellt werden, an denen später die jeweils eine optische Mikrolinse angeordnet werden soll.

Figur 8 zeigt einen weiteren Verfahrensschritt dieses Ausführungsbeispiels. Es ist zu erkennen, dass der Fotolack 13a - 13c auf der jeweiligen Oberseite 81a - 81c der dreidimensionalen Erhebungen 71a - 71c aufgetragen ist. Unter der Oberseite 81a - 81c der dreidimensionalen Erhebungen 71a - 71c ist die von der Substratoberfläche beabstandete Seite zu verstehen.

Erfindungsgemäß beinhaltet also der Schritt des Aufbringens des Fotolacks 13, dass der Fotolack 13a - 13c auf die hervorstehenden dreidimensionalen Erhebungen 71a - 71c aufgebracht wird. Dies schließt natürlich nicht aus, dass sich der Fotolack 13 auch in den Zwischenräumen zwischen den dreidimensionalen Erhebungen 71a - 71c auf der ersten bzw. zweiten Seite 11, 12 des Substrats 10 ablagern kann, was jedoch der Einfachheit halber hier nicht näher dargestellt ist.

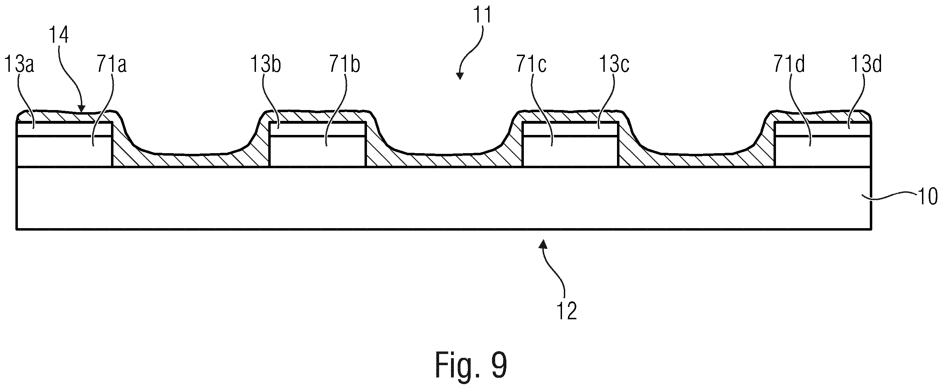

Figur 9 zeigt eine vereinfachte Seitenansicht, bei der nur eine einzelne Reihe der dreidimensionalen Erhebungen 71a - 71d abgebildet ist. Figur 9 zeigt außerdem einen weiteren Verfahrensschritt dieses Ausführungsbeispiels. Demnach beinhaltet der Schritt des Aufbringens der hydrophoben Beschichtung 14, dass die hydrophobe Beschichtung 14 auf die hervorstehenden dreidimensionalen Erhebungen 71a - 71d aufgebracht wird. Dies schließt natürlich nicht aus, dass sich die hydrophobe Beschichtung 14 auch in den Zwischenräumen zwischen den dreidimensionalen Erhebungen 71a - 71d auf der ersten bzw. zweiten Seite 11, 12 des Substrats 10, wie abgebildet, ablagern kann.

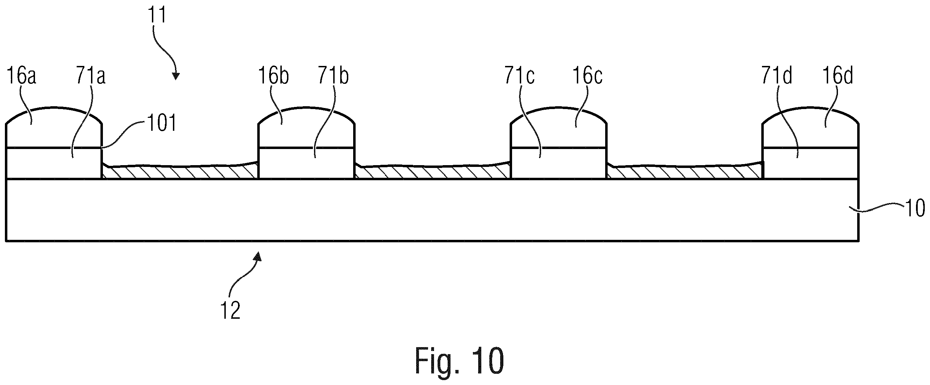

Figur 10 zeigt einen weiteren Verfahrensschritt dieses Ausführungsbeispiels. Demgemäß beinhaltet der Schritt des Entfernens des Fotolacks 13, dass der Fotolack 13a - 13d, einschließlich der darauf befindlichen hydrophoben Beschichtung 14, von der Oberfläche der hervorstehenden dreidimensionalen Erhebungen 71a - 71d entfernt wird. Somit kommt also die Oberfläche der dreidimensionalen Erhebungen 71a - 71d wieder zum Vorschein. Die dreidimensionalen Erhebungen 71a - 71d bzw. deren freigelegte Oberflächen können hydrophile Eigenschaften aufweisen.

Wie eingangs bereits erwähnt wurde, werden die einzelnen optischen Mikrolinsen 16a - 16d auf den Oberflächen der dreidimensionalen Erhebungen 71a - 71d angeordnet. Die einzelnen Mikrolinsen 16a - 16d können beispielsweise mittels Ink-Jet Druckverfahren, wie in Figur 1G abgebildet, auf die Oberflächen der dreidimensionalen Erhebungen 71a - 71d gedruckt werden. Es werden also einzelne Tropfen optischen Materials auf die Oberflächen der dreidimensionalen Erhebungen 71a - 71d aufgetragen.

Der Vorteil der dreidimensionalen Erhebungen 71a - 71d besteht hierbei darin, dass die umlaufenden Kanten 101 der Oberflächen der dreidimensionalen Erhebungen 71a - 71d dafür sorgen, dass die aufgedruckten Tropfen aufgrund der Oberflächenspannung auf den Oberflächen der dreidimensionalen Erhebungen 71a - 71d bleiben und nicht herunterfließen.

Dieser Effekt wird zusätzlich verstärkt, wenn die dreidimensionalen Erhebungen 71a - 71 d beziehungsweise die Oberflächen der dreidimensionalen Erhebungen 71a - 71d hydrophile Eigenschaften aufweisen.

Wie ferner in Figur 10 ersichtlich ist, bleibt die in den Zwischenräumen zwischen den dreidimensionalen Erhebungen 71a - 71d befindliche hydrophobe Beschichtung 14 bestehen.

Gemäß einigen Ausführungsformen kann das Substrat 10 zumindest an den vorbestimmten Orten 15a - 15f, an denen die jeweils eine optische Mikrolinse 16a - 16f angeordnet werden soll, lichtdurchlässig sein. Dies ist insbesondere dann vorteilhaft, wenn eine Lichtquelle vorhanden ist, die durch das Substrat 10 hindurch leuchten soll.

Ferner gilt alles, was zuvor mit Bezug auf die Figuren 1A bis 10 beschrieben wurde, gleichsam auch für Ausführungsformen, bei denen die einzelnen Mikrolinsen 16a - 16f entweder nur auf der zweiten Seite 12 des Substrats 10, oder auch auf beiden Seiten 11, 12 des Substrats 10 angeordnet sind.

Die Figuren 11A und 11B zeigen eine Seitenansicht bzw. eine Draufsicht eines weiteren Ausführungsbeispiels eines erfindungsgemäßen Mikrolinsenarrays 20'" mit beidseitig auf dreidimensionalen Erhebungen 71a - 71d, 71a' - 71d' angeordneten Mikrolinsen 16a - 16d, 16a' - 16d' in Kombination mit hinterleuchtbaren Schattenmasken bzw. Dias 43.

Das Substrat 10 weist an den Orten, an denen die jeweils eine optische Mikrolinse 16a - 16f angeordnet ist, einen lichtdurchlässigen Abschnitt 111 auf, der sich durch das Substrat 10 hindurch von der ersten Seite 11 bis zur zweiten Seite 12 erstreckt. Das Substrat 10 kann aber auch vollständig aus transparentem Material bestehen.

Auf der ersten Seite 11 des Substrats 10 ist eine Metallschicht 41 angeordnet. In der Metallschicht 41 sind die Dias 43 ausgebildet. Über der Metallschicht 41 ist eine weitere lichtdurchlässige SiO₂-Schicht 42 angeordnet.

Ferner sind auf der ersten Seite 11 des Substrats 10, und zwar auf der weiteren SiO₂-Schicht 42, dreidimensionale Erhebungen 71a - 71d angeordnet. Auf den Oberflächen bzw. Oberseiten der dreidimensionalen Erhebungen 71a - 71d ist jeweils eine Mikrolinse 16a - 16d angeordnet.

Auf der ersten Seite 11 des Substrats 10 ist ferner eine hydrophobe Beschichtung 14 aufgetragen. Die hydrophobe Beschichtung 14 erstreckt sich über die gesamte erste Seite 11 des Substrats 10. Hierbei ist die hydrophobe Beschichtung 14 auf der SiO₂-Schicht 42 angeordnet. Die hydrophobe Beschichtung 14 befindet sich außerdem in den Zwischenräumen der einzelnen dreidimensionalen Erhebungen 71a - 71d und umgibt die dreidimensionalen Erhebungen 71a - 71d zumindest abschnittsweise.

Auf der zweiten Seite 12 des Substrats 10 sind dreidimensionale Erhebungen 71a' - 71d' direkt auf der Oberfläche des Substrats 10 angeordnet. Auf den Oberflächen bzw. Oberseiten der dreidimensionalen Erhebungen 71a' - 71d' ist jeweils eine Mikrolinse 16a' - 16d' angeordnet.

Auf der zweiten Seite 12 des Substrats 10 ist ferner eine hydrophobe Beschichtung 14' aufgetragen. Die hydrophobe Beschichtung 14' erstreckt sich über die gesamte zweite Seite 12 des Substrats 10. Die hydrophobe Beschichtung 14' befindet sich außerdem in den Zwischenräumen der einzelnen dreidimensionalen Erhebungen 71a' - 71d' und umgibt die dreidimensionalen Erhebungen 71a' - 71d' zumindest abschnittsweise.

Das erfindungsgemäße Mikrolinsenarray 20'" kann von einer oder mehreren Lichtquellen 112a - 112d beleuchtet werden. Vorteilhafter Weise befinden sich die Lichtquellen 112a - 112d auf der den Dias 43 abgewandten Seite 12 des Substrats 10. Somit leuchtet das von den Lichtquellen 112a - 112d ausgesandte Licht durch die auf der zweiten Seite 12 des Substrats 10 angeordneten Mikrolinsen 16a' - 16d' und durch das Substrat 10 hindurch. Das Licht trifft dann auf die Rückseite der Dias 43, die somit hinterleuchtet werden. Das von den Dias 43 durchgelassene Licht tritt dann durch die auf der ersten Seite 11 des Substrats 10 angeordneten Mikrolinsen 16a - 16d wieder aus.

Beim Auftragen des Fotolacks 13 auf die erste und/oder zweite Seite 11, 12 des Substrats 10, und insbesondere beim Auftragen des Fotolacks 13 auf die dreidimensionalen Erhebungen 71a - 71d, kann es vorkommen, dass der Fotolack 13 nicht exakt auf die Oberflächen der dreidimensionalen Erhebungen 71a - 71d aufgetragen wird.

Dies ist in den Figuren 12A, 12B und 12C dargestellt. Die Figuren 12A und 12B zeigen eine Seitenansicht einer dreidimensionalen Erhebung 71. Figur 12C zeigt eine Draufsicht auf die Oberseite der dreidimensionalen Erhebung 71.

In Figur 12A ist gezeigt, wie der Fotolack 13 nicht exakt auf der Oberseite der dreidimensionalen Erhebung 71 aufgetragen ist. Während rechts im Bild eine Stelle 121 der Oberfläche unbedeckt bleibt, läuft der Fotolack 13 auf der linken Seite der dreidimensionalen Erhebung 71 herunter.

Beim anschließenden Auftragen der hydrophoben Beschichtung 14 (Figur 12B) bedeckt die hydrophobe Beschichtung somit auch die vom Fotolack 13 nicht bedeckte Stelle 121 der Oberfläche der dreidimensionalen Erhebung 71.

Beim anschließenden Entfernen des Fotolacks 13 mitsamt der darauf befindlichen hydrophoben Beschichtung 14 (Figur 12C) bleibt nun die hydrophobe Beschichtung 14 auf der zuvor nicht von der Fotolack 13 bedeckten Stellte 121 haften.

Dieser soeben beschriebene Effekt kann auch zielgerichtet eingesetzt werden, indem beispielsweise nur bestimmte Stellen der Oberfläche der dreidimensionalen Erhebungen 71 mit dem Fotolack 13 beschichtet werden.

Figur 13 zeigt eine Draufsicht auf eine dreidimensionale Erhebung 71 nach einem vorgenannten Ausführungsbeispiel. Es ist von der Außenseite beginnend radial nach innen verlaufend ein Bereich einer hydrophoben Beschichtung 14 zu erkennen. Im Inneren dieser kreisförmigen hydrophoben Beschichtung 14 ist ein Bereich 131 ohne hydrophobe Beschichtung zu erkennen.

Dies deutet darauf hin, dass der Bereich 131 zuvor mit dem Fotolack 13 bedeckt war, wobei der Fotolack 13 mitsamt der darauf befindlichen hydrophoben Beschichtung 14 entfernt wurde.

Die in Figur 13 gezeigte kreisförmige hydrophobe Beschichtung 14 an den Rändern der dreidimensionalen Erhebung 71 kann dazu dienen, dass beispielsweise beim Ink-Jet Drucken die ausgestoßenen Tröpfchen vom hydrophoben Rand 14 in das Zentrum 131 der dreidimensionalen Struktur 71 laufen. Dieser Effekt wird verstärkt, wenn der nicht mit der hydrophoben Beschichtung 14 bedeckte Bereich 13 hydrophile Eigenschaften aufweist.

Gemäß des soeben erwähnten Ausführungsbeispiels bedeckt also die hydrophobe Beschichtung 14 zumindest abschnittsweise die jeweils vom Substrat 10 beabstandete Oberfläche von zumindest einer der dreidimensionalen Erhebungen 71.

Figur 14 zeigt noch einmal eine Zusammenfassung des erfindungsgemäßen Verfahrens anhand eines Blockdiagramms.

In Block 1401 wird ein Substrats 10 mit einer ersten Seite 11 und einer gegenüberliegenden zweiten Seite 12 bereitgestellt.

In Block 1402 wird ein Fotolack zumindest abschnittsweise auf die erste Seite 11 des Substrats 10 aufgebracht.

In Block 1403 wird der Fotolack 13 strukturiert, und zwar derart, dass der strukturierte Fotolack 13a - 13e an vorbestimmten Orten 15a - 15e auf der ersten Seite 11 des Substrats 10 verbleibt, an denen später jeweils eine optische Mikrolinse 16a - 16e angeordnet werden soll.

In Block 1404 wird eine hydrophobe Beschichtung 14 auf die erste Seite 11 des Substrats 10 aufgebracht und anschließend wird der strukturierte Fotolack 13a - 13e einschließlich der darauf befindlichen hydrophoben Beschichtung 14 von der ersten Seite 11 des Substrats 10 entfernt.

In Block 1405 wird je eine Mikrolinse 16a - 16e auf die von dem strukturierten Fotolack 13a - 13e befreiten Stellen der ersten Seite 11 des Substrats 10 angeordnet. Nachfolgend soll die Beschreibung noch einmal kurz und stichpunktartig zusammengefasst werden.

Die Beschreibung betrifft unter anderem ein Verfahren zum Drucken von Mikrolinsenarrays (MLA) 20, 20', 20", 20''' sowie einzelnen Linsen 16a - 16f (beidseitig, große Substrate, auch Freiformen möglich etc.)

Denkbare Ausführungsformen sind:
- Kombination mit Dia 43 (Metallschicht auf Glas) --> komplexere Systeme wie Projektoren möglich
- Kombination mit LCOS
- doppelseitiges MLA (geht also über plankonvexe Linsenarrays hinaus)
- geeignet für große Substrate, da kein Stempelwerkzeug, sondern Druckkopf, der auf einer Schiene fährt und damit größere Flächen bedienen kann (Bei Linsen auf Wafer-Ebene, d.h. Wafer Level Optics (WLO), wäre ein genaueres Positioniersvstem erforderlich, um präzise abformen zu können. Mit dem Verfahren (Benetzungsstrukturen) kann man mit einer nicht so präzisen Druckvorrichtung relative präzise arbeiten.)
- mehrstufiger Prozess f . Freiformen
   ∘ 1. Schritt über lithographisch erzeugte Benetzungsstrukturen
   ∘ 2. Schritt: weitere Schichten aufdrucken
- Hohe Präzision der Ausgangslinse möglich, höher als beim reinen Drucken ohne Benetzungsstrukturen. Auf die Benetzungsstrukturen können dann zusätzliche opt. Funktionselemente gedruckt werden.
- Schichtdicke im Bereich 10 µm bis 200 µm
- Linsendurchmesser z. B. 50 µm bis 2 mm
- Substratmaterial: Glas, Polymere
- Dosieren nicht nur über Drucken (digitales Drucken = Inkjet-Verfahren, Mikropumpe), sondern auch über andere Dosierverfahren über Dosierventil möglich (bestimmtes Volumen für bestimmte Zeit)
- Herstellung Benetzungsstrukturen lithographisch
- Hydrophobisierung entweder aus der Gasphase oder aus der Flüssigphase

Das Verfahren weist die folgenden Vorteile auf:
- keine aufwändigen Abformprozesse nötig (keine Stempelwerkzeuge sind mehr notwendig)
- Vorteil Inkjet: Volumen sehr gut kontrollierbar (Einzeltropfen klein im Vergleich zum Volumen einer Linse), Positioniergenauigkeit des Drucksystems muss nicht unbedingt der gewünschten Positionstoleranz der Einzellinsen entsprechen
- Geräteaufwand gering, hohe Positioniergenauigkeit des Geräts nur während Lithographieschritt entscheidend
- Es wird "genau das richtige Volumen an ungefähr die richtige Stelle" appliziert.
- Projektoren: Lithographie zur Diaherstellung nötig --> Lithographieschritt für Benetzungsstrukturen erfordert kein spezielles Equipment (Gegensatz zu Abformung- hier Stempel)
- berührungsloses Dosieren / Drucken möglich, keine Beschädigung oder Ablösung der Linsen während der Prozessierung (insb. beim Entformen)
- einzelne Linsen voneinander getrennt, keine durchgehende Schicht nötig (wird bei Abformung benötigt, um Schwindung vorzuhalten) --> dadurch erhöhte thermische Stabilität
- bei Abformung bilden sich über die verbleibenden "Stege" zwischen den abgeformten Linsen thermische Schwachstellen, da beim Abtrennen der einzelnen Linsen voneinander durch das Sägen Beschädigungen die Eigenschaften der Linsen beeinträchtigen können

Die Fotolackschicht 13 kann eine Schichtdicke von 100 nm bis 5µm aufweisen.

Die einzelnen strukturierten Fotolack-Abschnitte 13a - 13e (Figur 1C) können einen Durchmesser von 790 µm aufweisen. Ebenso können die Oberflächen der dreidimensionalen Erhebungen 71 einen Durchmesser von 790 µm aufweisen.

Die Mikrolinsen 16 können einen Linsenpitch von 797 µm aufweisen.

## Patentansprüche

1. Verfahren zum Herstellen eines optischen Mikrolinsenarrays (20, 20', 20", 20'''), wobei das Verfahren beinhaltet:
Bereitstellen eines Substrats (10) mit einer ersten Seite (11) und einer gegenüberliegenden zweiten Seite (12),
zumindest abschnittsweises Aufbringen eines Fotolacks (13) auf die erste Seite (11) des Substrats (10),
wobei vor dem Aufbringen des Fotolacks (13) auf der ersten Seite (11) des Substrats (10) dreidimensionale Erhebungen (71a - 71f) bereitgestellt werden, die eine Höhe zwischen 50 nm bis 5 µm aufweisen und über die jeweilige Substratoberfläche der ersten Seite (11) des Substrats (10) hervorstehen, und wobei diese hervorstehenden dreidimensionalen Erhebungen (71a - 71f) an vorbestimmten Orten (15a - 15f) bereitgestellt werden, an denen später die jeweils eine optische Mikrolinse (16a - 16f) angeordnet werden soll, wobei der Schritt des Aufbringens des Fotolacks (13, 13') beinhaltet, dass der Fotolack (13, 13') auf die hervorstehenden dreidimensionalen Erhebungen (71a - 71f) aufgebracht wird,
Strukturieren des Fotolacks (13) derart, dass der strukturierte Fotolack (13a - 13e) an den vorbestimmten Orten (15a - 15e) auf der ersten Seite (11) des Substrats (10) verbleibt, an denen später jeweils eine optische Mikrolinse (16a - 16e) angeordnet werden soll,
Aufbringen einer hydrophoben Beschichtung (14, 14') auf die erste Seite (11) des Substrats (10), wobei der Schritt des Aufbringens der hydrophoben Beschichtung (14) beinhaltet, dass die hydrophobe Beschichtung (14) auf die hervorstehenden dreidimensionalen Erhebungen (71a - 71f) aufgebracht wird, und anschließendes Entfernen des strukturierten Fotolacks (13a - 13e) einschließlich der darauf befindlichen hydrophoben Beschichtung (14) von den hervorstehenden dreidimensionalen Erhebungen (71a - 71f), und
Anordnen von je einer Mikrolinse (16a - 16e) auf die von dem strukturierten Fotolack (13a - 13e) befreiten Stellen der ersten Seite (11) des Substrats (10).

2. Verfahren nach Anspruch 1, ferner beinhaltend
zumindest abschnittsweises Aufbringen eines Fotolacks (13') auf die zweite Seite (12) des Substrats (10),
Strukturieren des Fotolacks (13a' - 13e') derart, dass der strukturierte Fotolack (13a' - 13e') an vorbestimmten Orten (15a' - 15e') auf der zweiten Seite (12) des Substrats (10) verbleibt, an denen später jeweils eine optische Mikrolinse (16a' - 16e') angeordnet werden soll,
Aufbringen einer hydrophoben Beschichtung (14') auf die zweite Seite (12) des Substrats (10) und anschließendes Entfernen des strukturierten Fotolacks (13a' - 13e') einschließlich der darauf befindlichen hydrophoben Beschichtung (14') von der zweiten Seite (12) des Substrats (10), und
Anordnen von je einer Mikrolinse (16a' - 16e') auf die von dem strukturierten Fotolack (13a' - 13e') befreiten Stellen der zweiten Seite (12) des Substrats (10).

3. Verfahren nach Anspruch 1 oder 2, wobei vor dem Aufbringen des Fotolacks (13) eine Metallschicht (41, 41') auf der ersten oder der zweiten Seite (11, 12) des Substrats (10) angeordnet und optional strukturiert wird, und auf der Metallschicht (41, 41') eine weitere Schicht (42, 42') eines lichtdurchlässigen Materials angeordnet wird, wobei der Fotolack (13) dann auf diese weitere Schicht (42, 42') eines lichtdurchlässigen Materials aufgebracht wird.

4. Verfahren nach Anspruch 3, wobei das Strukturieren der Metallschicht (41, 41') ein teilweises und lokales Entfernen der Metallschicht (41, 41') beinhaltet, sodass eine hinterleuchtbare Struktur (43) in der Metallschicht (41, 41') bereitgestellt wird.

5. Verfahren nach Anspruch 3 oder 4, wobei die Metallschicht (41, 41') derart auf dem Substrat (10) angeordnet wird, dass sich der strukturierte Teil (43a - 43f) der Metallschicht (41, 41') an den vorbestimmten Orten (15a - 15f) auf der ersten Seite (11) oder der zweiten Seite (12) des Substrats (10) befindet, an denen später die jeweils eine optische Mikrolinse (16a - 16f) angeordnet werden soll.

6. Verfahren nach einem der vorhergehenden Ansprüche, wobei die hervorstehenden dreidimensionalen Erhebungen (71a - 71f) als zylindrische und/oder transparente Podeste ausgeführt sind.

7. Verfahren nach Anspruch 6, wobei die zylindrischen und/oder transparenten Podeste (71a - 71f) einen Durchmesser zwischen 50 µm und 2 mm aufweisen.

8. Verfahren nach einem der vorhergehenden Ansprüche, wobei das Substrat (10) zumindest an den vorbestimmten Orten (15a - 15f), an denen die jeweils eine optische Mikrolinse (16a - 16f) angeordnet werden soll, lichtdurchlässig ist.

9. Verfahren nach einem der vorhergehenden Ansprüche, wobei die Mikrolinsen (16a - 16f) tröpfchenweise mittels eines Ink-Jet Druckverfahrens für ein optisches Material auf die erste und/oder die zweite Seite (11, 12) des Substrats (10) gedruckt werden.

10. Mikrolinsenarray (20, 20', 20", 20''') aufweisend
ein zumindest abschnittsweise lichtdurchlässiges Substrat (10) mit einer ersten Seite (11) und einer gegenüberliegenden zweiten Seite (12),
wobei auf der ersten und/oder auf der zweiten Seite (11, 12) des Substrats (10) jeweils eine Vielzahl von dreidimensionalen Erhebungen (71a - 71f), die über die jeweilige Substratoberfläche der ersten oder zweiten Seite (11, 12) des Substrats (10) hervorstehen, angeordnet ist,
wobei auf jeder der vom Substrat (10) beabstandeten Oberflächen der dreidimensionalen Erhebungen (71a - 71f) eine Mikrolinse (16a - 16f) angeordnet ist, und
**dadurch gekennzeichnet, dass** die hervorstehenden dreidimensionalen Erhebungen eine Höhe zwischen 50nm bis 5µm aufweisen und, dass sich jeweils zwischen den dreidimensionalen Erhebungen (71a - 71f) auf der ersten und/oder der zweiten Seite (11, 12) des Substrats (10) eine hydrophobe Beschichtung (14, 14') befindet.

11. Mikrolinsenarray (20, 20', 20", 20''') nach Anspruch 10, wobei die hydrophobe Beschichtung (14, 14') zumindest abschnittsweise auch die jeweils vom Substrat (10) beabstandete Oberfläche von zumindest einer der dreidimensionalen Erhebungen (71a - 71f) bedeckt.

12. Mikrolinsenarray (20, 20', 20", 20''') nach Anspruch 10 oder 11, wobei zwischen den dreidimensionalen Erhebungen (71a - 71f) und dem Substrat (10) eine Metallschicht (41) und eine zumindest abschnittsweise transparente Schicht (42) angeordnet sind, wobei die Metallschicht (41) auf dem Substrat (10) und die zumindest abschnittsweise transparente Schicht (42) auf der Metallschicht (41) angeordnet ist, und wobei sich die hydrophobe Beschichtung (14, 14') auf der zumindest abschnittsweise transparenten Schicht (42) befindet.

13. Mikrolinsenarray (20, 20', 20", 20''') nach einem der Ansprüche 10 bis 12, wobei die Metallschicht (41) an Stellen unterhalb einer dreidimensionalen Erhebung (71a - 71f) zumindest eine Aussparung (43) aufweist.

## Claims

1. Method for manufacturing an optical microlens arrays (20, 20', 20", 20'''), wherein the method comprises:
providing a substrate (10) having a first side (11) and an opposite second side (12),
applying a photoresist (13) to the first side (11) of the substrate (10) at least in portions,
wherein, before applying the photoresist (13) on the first side (11) of the substrate (10), three-dimensional elevations (71a - 71f) comprising a height between 50nm and 5 µm and protruding over the respective substrate surface of the first side (11) of the substrate (10) are provided, and wherein these protruding three-dimensional elevations (71a - 71f) are provided at predetermined locations (15a - 15f) where the one optical microlens (16a - 16f) each is to be later arranged, wherein the step of applying the photoresist (13, 13') includes applying the photoresist (13, 13') to the protruding three-dimensional elevations (71a - 71f),
structuring the photoresist (13) such that the structured photoresist (13a - 13e) remains at the predetermined locations (15a - 15e) on the first side (11) of the substrate (10) where one optical microlens (16a - 16e) each is to be later arranged,
applying a hydrophobic coating (14, 14') to the first side (11) of the substrate (10), wherein the step of applying the hydrophobic coating (14) includes applying the hydrophobic coating (14) to the protruding three-dimensional elevations (71a - 71f), and subsequently removing the structured photoresist (13a - 13e) including the hydrophobic coating (14) located thereon from the protruding three-dimensional elevations (71a - 71f), and
arranging one microlens (16a - 16e) each on the spots of the first side (11) of the substrate (10) that are freed from the structured photoresist (13a - 13e).

2. Method according to claim 1, further comprising:
applying a photoresist (13') to the second side (12) of the substrate (10) at least in portions,
structuring the photoresist (13a' - 13e') such that the structured photoresist (13a' - 13e') remains at predetermined locations (15a' - 15e') on the second side (12) of the substrate (10) where one microlens (16a' - 16e') each is to be later arranged,
applying a hydrophobic coating (14') to second side (12) of the substrate (10) and subsequently removing the structured photoresist (13a' - 13e') including the hydrophobic coating (14') located thereon from the second side (12) of the substrate (10), and
arranging one microlens (16a' - 16e') each on the spots of the second side (12) of the substrate (10) that are freed from the structured photoresist (13a' - 13e').

3. Method according to claim 1 or 2, wherein, before applying the photoresist (13), a metal layer (41, 41') is arranged on the first or the second side (11, 12) of the substrate (10) and is optionally structured, and a further layer (42, 42') of a translucent material is arranged on the metal layer (41, 41'), wherein the photoresist (13) is then applied to this further layer (42, 42') of a translucent material.

4. Method according to claim 3, wherein structuring the metal layer (41, 41') comprises partially and locally removing the metal layer (41, 41') so that a structure (43) that may be backlit is provided in the metal layer (41, 41').

5. Method according to claim 3 or 4, wherein the metal layer (41, 41') is arranged on the substrate (10) such that the structured part (43a - 43f) of the metal layer (41, 41') is located at the predetermined locations (15a - 15f) on the first side (11) or the second side (12) of the substrate (10) where the one microlens (16a - 16f) each is to be later arranged.

6. Method according to one of the preceding claims, wherein the protruding three-dimensional elevations (71a - 71f) are configured as cylindrical and/or transparent pedestals.

7. Method according to claim 6, wherein the cylindrical and/or transparent pedestal (71a - 71f) comprise a diameter between 50 µm and 2 mm.

8. Method according to any one of the preceding claims, wherein the substrate (10) is translucent at least at the predetermined locations (15a - 15f) where the one optical microlens (16a - 16f) each is to be arranged.

9. Method according to any of the preceding claims, wherein the microlenses (16a - 16f) are printed in droplets by means of an inkjet printing method for an optical material on the first and/or the second side (11, 12) of the substrate (10).

10. Microlens array (20, 20', 20", 20''') comprising:
a substrate (10) that is translucent at least in portions and has a first side (11) and an opposite second side (12),
wherein, on the first and/or the second side (11, 12) of the substrate (10), a respective multitude of three-dimensional elevations (71a - 71f) protruding over the respective substrate surface of the first or second side (11, 12) of the substrate (10) is arranged,
wherein one microlens (16a - 16f) is arranged on each of the surfaces of the three-dimensional elevations (71a - 71f) that are spaced apart from the substrate (10), and
**characterized in that** the protruding three-dimensional elevations (71a - 71f) comprise eights between 50 nm and 5 µm, and that a hydrophobic coating (14, 14') is located between the three-dimensional elevations (71a - 71f) on the first and/or second side (11, 12) substrate (10), respectively.

11. Microlens array (20, 20', 20", 20''') according to claim 10, wherein the hydrophobic coating (14, 14') also covers at least in portions the surface of at least one of the three-dimensional elevations (71a - 71f) that is spaced apart from the substrate (10).

12. Microlens array (20, 20', 20", 20''') according to claim 10 or 11, wherein a metal layer (41) and a layer (42) that is transparent at least in portions are arranged between the three-dimensional elevations (71a - 71f) and the substrate (10), wherein the metal layer (41) is arranged on the substrate (10) and the layer (42) that is transparent at least in portions is arranged on the metal layer (41), and wherein the hydrophobic coating (14, 14') is located on the layer (42) that is transparent at least in portions.

13. Microlens array (20, 20', 20", 20''') according to any of claims 10 to 12, wherein the metal layer (41) comprises at least one recess (43) at spots below a three-dimensional elevation (71a - 71f).

## Revendications

1. Procédé de fabrication d'une matrice de microlentilles optiques (20, 20' 20", 20'''), le procédé comprenant le fait de:
prévoir un substrat (10) présentant une première face (11) et une deuxième face opposée (12),
appliquer, au moins par segments, un photorésist (13) sur la première face (11) du substrat (10),
dans lequel sont prévues, avant l'application du photorésist (13) sur la première face (11) du substrat (10), des élévations tridimensionnelles (71a à 71f) qui présentent une hauteur comprise entre 50 nm et 5 µm et qui saillent par rapport à la surface de substrat respective de la première face (11) du substrat (10), et dans lequel ces élévations tridimensionnelles saillantes (71a à 71f) sont prévues à des endroits prédéterminés (15a à 15f) auxquels doit ultérieurement être disposée respectivement une microlentille optique (16a à 16f), dans lequel l'étape consistant à appliquer le photorésist (13, 13') comporte le fait que le photorésist (13, 13') est appliqué sur les élévations tridimensionnelles saillantes (71a à 71f),
structurer le photorésist (13) de sorte que le photorésist structuré (13a à 13e) reste sur la première face (11) du substrat (10) aux endroits prédéterminés (15a à 15e) auxquels doit ultérieurement être disposée respectivement une microlentille optique (16a à 16e),
appliquer un revêtement hydrophobe (14, 14') sur la première face (11) du substrat (10), où l'étape consistant à appliquer le revêtement hydrophobe (14) comporte le fait que le revêtement hydrophobe (14) est appliqué sur les élévations tridimensionnelles saillantes (71a à 71f), et ensuite éliminer le photorésist structuré (13a à 13e), y compris le revêtement hydrophobe (14) se trouvant sur ce dernier, des élévations tridimensionnelles saillantes (71a à 71f), et
disposer respectivement une microlentille (16a à 16e) sur les endroits de la première face (11) du substrat (10) libérés du photorésist structuré (13a à 13e).

2. Procédé selon la revendication 1, comportant par ailleurs le fait de
appliquer, au moins par segments, un photorésist (13') sur la deuxième face (12) du substrat (10),
structurer le photorésist (13a' à 13e') de sorte que le photorésist structuré (13a' à 13e') reste sur la deuxième face (12) du substrat (10) aux endroits prédéterminés (15a à 15e) auxquels doit ultérieurement être disposée respectivement une microlentille optique (16a' à 16e'),
appliquer un revêtement hydrophobe (14') sur la deuxième face (12) du substrat (10) et ensuite éliminer le photorésist structuré (13a' à 13e'), y compris le revêtement hydrophobe (14') se trouvant sur ce dernier, de la deuxième face (12) du substrat (10), et
disposer respectivement une microlentille (16a' à 16e') sur les endroits de la deuxième face (12) du substrat (10) libérés du photorésist structuré (13a' à 13e').

3. Procédé selon la revendication 1 ou 2, dans lequel est disposée et optionnellement structurée, avant l'application du photorésist (13), une couche métallique (41, 41') sur la première ou la deuxième face (11, 12) du substrat (10), et est disposée sur la couche métallique (41, 41') une autre couche (42, 42') d'un matériau translucide, dans lequel le photorésist (13) est alors appliqué sur cette autre couche (42, 42') réalisée en un matériau translucide.

4. Procédé selon la revendication 3, dans lequel la structuration de la couche métallique (41, 41') comporte le fait d'éliminer partiellement et localement la couche métallique (41, 41'), de sorte que soit prévue une structure rétroéclairée (43) dans le la couche métallique (41, 41').

5. Procédé selon la revendication 3 ou 4, dans lequel la couche métallique (41, 41') est disposée sur le substrat (10) de sorte que la partie structurée (43a à 43f) de la couche métallique (41, 41') se trouve aux endroits prédéterminés (15a à 15f) sur la première face (11) ou la deuxième face (12) du substrat (10) auxquels doit ultérieurement être disposée respectivement une microlentille optique (16a à 16f).

6. Procédé selon l'une des revendications précédentes, dans lequel les élévations tridimensionnelles saillantes (71a à 71f) sont réalisées sous forme de socles cylindriques et/ou translucides.

7. Procédé selon la revendication 6, dans lequel les socles cylindriques et/ou translucides (71a à 71f) présentent un diamètre compris entre 50 microns et 2 mm.

8. Procédé selon l'une des revendications précédentes, dans lequel le substrat (10) est translucide au moins aux endroits prédéterminés (15a à 15f) auxquels doit ultérieurement être disposée respectivement une microlentille optique (16a à 16f).

9. Procédé selon l'une des revendications précédentes, dans lequel les microlentilles (16a à 16f) sont imprimées par gouttelettes au moyen d'un procédé d'impression par jet d'encre pour un matériau optique sur la première et/ou la deuxième face (11, 12) du substrat (10).

10. Matrice de microlentilles (20, 20', 20", 20''') présentant
un substrat (10) translucide, au moins par segments, avec une première face (11) et une deuxième face opposée (12),
dans laquelle sont disposées, sur la première et/ou sur la deuxième face (11, 12) du substrat (10), respectivement une pluralité d'élévations tridimensionnelles (71a à 71f) qui saillent par rapport à la surface de substrat respective de la première ou deuxième face (11, 12) du substrat (10),
dans laquelle est disposée, sur chacune des surfaces des élévations tridimensionnelles (71a à 71f) distantes du substrat (10), une microlentille (16a à 16f), et
**caractérisée par le fait que** les élévations tridimensionnelles saillantes présentent une hauteur comprise entre 50 nm et 5 µm et que se trouve, respectivement entre les élévations tridimensionnelles (71a à 71f), sur la première et/ou la deuxième face (11, 12) du substrat (10), un revêtement hydrophobe (14, 14').

11. Matrice de microlentilles (20, 20', 20", 20''') selon la revendication 10, dans laquelle le revêtement hydrophobe (14, 14') recouvre, au moins par segments, également la surface distante du substrat (10) d'au moins l'une des élévations tridimensionnelles (71a à 71f).

12. Matrice de microlentilles (20, 20', 20", 20''') selon la revendication 10 ou 11, dans laquelle sont disposées, entre les élévations tridimensionnelles (71a à 71f) et le substrat (10), une couche métallique (41) et une couche translucide au moins par segments (42), dans laquelle la couche métallique (41) est disposée sur le substrat (10) et la couche translucide au moins par segments (42) est disposée sur la couche métallique (41), et dans laquelle le revêtement hydrophobe (14, 14') se trouve sur la couche translucide au moins par segments (42).

13. Matrice de microlentilles (20, 20', 20", 20''') selon l'une des revendications 10 à 12, dans laquelle la couche métallique (41) présente, à des endroits au-dessous d'une élévation tridimensionnelle (71a à 71f), au moins un évidement (43).
